# EUROPEAN PATENT APPLICATION

(11) **EP 0 840 531 A2**
(43) Date of publication of application: **06.05.1998**
(21) Application number: 97660113.8
(22) Date of filing: 22.10.1997
(51) Int. Cl.: H04Q 7/22

(54) **Data transfer method, cellular radio system and mobile station**

(30) Priority: 01.11.1996 FI 964416
(71) Applicant: NOKIA MOBILE PHONES LTD., 02150 Espoo (FI)
(72) Inventor: Pussinen, Arto, 90540 Oulu (FI)
(74) Representative: Lind, Robert

(57) **Abstract**

The invention relates to a method for transferring unstructured supplementary service data, or USS data, in a cellular system. The invention also relates to a cellular system and a mobile station that realize the method. The invention can be advantageously applied in digital cellular systems such as the GSM (Global System for Mobile Communications). The underlying idea of the invention is that a segmentation field is coded (121, 131) to an USSD message to manage transfer of messages of various lengths. The segmentation field can advantageously have two values the first of which indicates that the transferred message is segmented and that the current message will be followed by another message. The second value indicates that the current message is the last one. The arrangement according to the invention makes it possible to transfer USS data the length of which has no absolute upper limit. The invention can be advantageously applied to the transfer of Internet pages, for example. The arrangement according to the invention makes it possible to display the USS data in a short time so that the transfer and displaying of USS data hampers the use of the mobile station for possible other functions as little as possible.

## Description

The invention relates to a method for transferring Unstructured Supplementary Service Data (USSD) in a cellular system. The invention also relates to a cellular system and a mobile station that realize the method. The invention can be advantageously applied in digital cellular systems such as the GSM (Global System for Mobile Communications).

In addition to data and voice transmission services on the traffic channel, cellular systems offer supplementary services wherein data is transferred on a signalling channels. Then the data transfer associated with the supplementary services can be performed simultaneously with the connection established on the traffic channel, if necessary.

Messages related to supplementary services are transferred between the mobile station and the cellular system's home location register (HLR) or visitor public land mobile network (VPLMN). The message transferred includes information on how each of the network elements should handle the message. To enable the introduction of new supplementary services, the messages related to the supplementary service can be transferred in the GSM system, for example, as Unstructured Supplementary Services (USS) data, so that messages can be transferred transparently also in parts of the system that have no knowledge of the supplementary service in question.

In the GSM system, the USS data is transferred on signalling channels called the stand-alone dedicated control channel (SDCCH) and fast associated control channel (FACCH). As known, the USSD services in the GSM system use the abstract syntax notation one (ASN.1) coding for the data transferred. The ASN.1 is a transmission protocol layer syntax notation defined in the standards of the International Standardization Organization (ISO).

The structure and functions of the GSM system are described in general in reference [1]. Prior art supplementary services, USS data handling and transfer as well as the user interface in the GSM system are described in more detail in references [2] to [7].

One of the disadvantages related to the prior art is that the length of a USSD message is limited. For example, in the GSM system, the length of one USSD message is limited to 182 characters. This limitation makes it impossible to send longer messages in one part.

A method is known for solving this problem wherein the transferred USSD message is divided into parts sent separately. The number of these separately sent parts depends on the length of the transferred USSD message. If, for example, the transferred message is a page comprising ASCII characters, that message has to be sent in multiple parts. Then each separately sent part of the page is presented as a separate event on the receiver display after the previous transferred part of the page. So the page is generated on the display one transferred page part at a time.

The prior art arrangement described above has the disadvantage that in a display which shows the whole display area at once, the display function has to be performed several times. Therefore, it takes a relatively long time to display a message transferred in multiple parts. So, the transfer and display of USSD messages may considerably hamper the simultaneous use of other functions of the mobile station.

The object of the invention is to provide an arrangement for transferring USSD messages, eliminating the aforementioned problems.

The invention is based, among other things, on the notion that a transferred USSD message includes a segmentation field (SGF) to manage transfer of messages of various lengths. Advantageously the segmentation field can have two values the first of which indicates that the transferred message is segmented and that the USSD message in question will be followed by a next USSD message. The second value indicates that the current USSD message is the last one.

According to the invention, when applying the ASN.1 coding used in the GSM system, for example, the USSD message is defined as a sequence which can be elliptically extended. When the segmentation field can be added to the USSD message as an elliptic extension, the protocol compatibility problems can be avoided.

The arrangement according to the invention makes it possible to transfer USSD messages with no absolute upper limit to their length. The received parts of such messages can be advantageously stored and concatenated so that a message can be shown on the display of the mobile station with a single display operation after the segmentation field representing the last message has been received. Then the time used for the display operation is as short as possible and the transfer and display of USSD messages hampers the simultaneous use of possible other functions of the mobile station as little as possible.

The arrangement according to the invention also has the advantage that USSD messages coded according to the method can be transferred to mobile stations which do not have special means for utilizing the segmentation according to the method. Such a mobile station sees the messages as consisting of separate parts and will not be confused by the segmentation fields. So, segmentation is compatible with earlier equipment versions.

The method according to the invention is characterized in that a segmentation data field (SGM) is coded into the USSD message.

The cellular system according to the invention is characterized in that the means for transferring the USS data comprises means for coding the segmentation field to the USSD message to be transferred and means for reading the segmentation data field from the transferred USSD message.

The mobile station according to the invention is characterized in that
- the means for transferring the USS data comprises means for coding the segmentation data field to the USSD message to be transferred and/or
- the means for receiving the USS data comprises means for reading the segmentation data field (SGM) from the transferred USSD message.

The preferred embodiments of the invention are presented in the sub-claims of this document.

The invention is described in greater detail with reference to the attached drawing, wherein
- Fig. 1: shows a flow chart of a method according to the invention for transferring USS data;
- Fig. 2: shows a flow chart of a method according to the invention for receiving USS data, and
- Fig. 3: shows a block diagram of a mobile station according to the invention and how it is connected to a cellular system according to the invention.

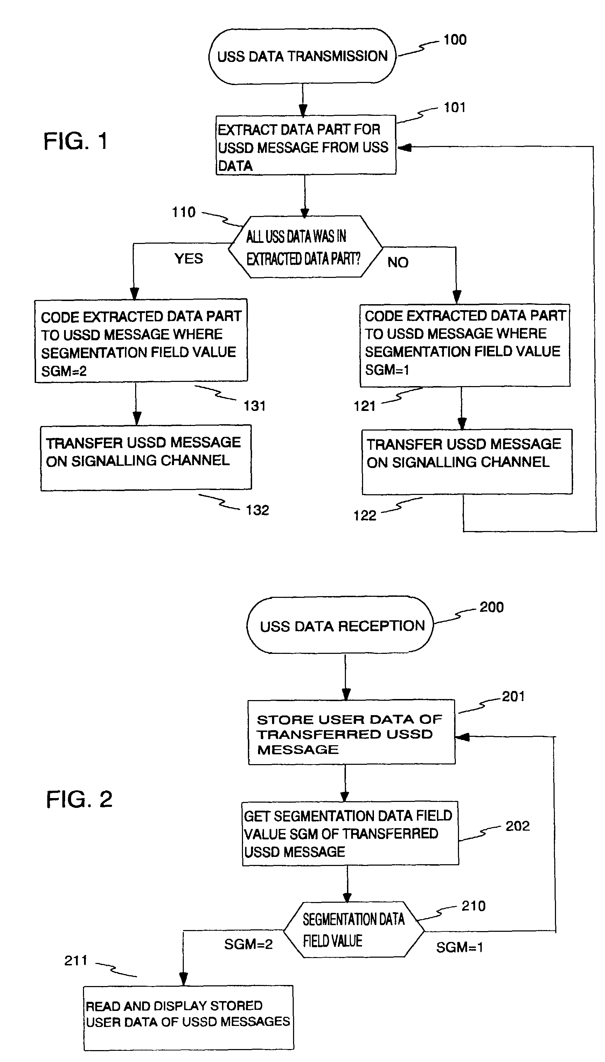

Fig. 1 shows a method 100 according to the invention for transferring USS data. A part is separated from the USS data which fits in one USSD message, block 101. Then it is checked whether all remaining USS data that was not yet transferred fitted in the separated data part, block 110. If all remaining USS data did not fit in the separated data part, the separated USS data part is coded to an USSD message in block 121 so that the USSD message includes a segmentation data field which has the value 'one'. Then the coded USSD message is transferred on the signal channel, block 122, and the procedure returns to block 101.

Blocks 121 and 122 are executed until the USS data part separated in block 101 entirely contains the untransferred USS data, block 110. Then the separated, last USS data part is coded to an USSD message in block 131 so that the USSD message includes a segmentation data field which has the value 'two'. Then the last USSD message is transferred on the transmission path, 132.

So, in the method depicted in Fig. 1, the segmentation data field of the USSD message to be transferred can have two values as follows:
1 "Segmented USSD message which will be followed by another segmented USSD message"
2 "The last segmented USSD message"

Fig. 2 shows a method 200 according to the invention for receiving USS data sent by means of the method according to Fig. 1. The user data included in the transferred USSD message is stored in block 201, and the value in the segmentation data field included in the transferred USSD message is detected, block 202. If the value in the segmentation field is one, the USSD message in question is not the last one of the USSD messages to be transferred, so the user data included in the next USSD message is then stored, block 201. If the value in the segmentation field is two, the USSD message in question is the last one of the USSD messages to be transferred. Then, the stored user data of the USSD messages are read, concatenated and displayed. Thus, all USS data can be displayed simultaneously.

Sending of the segmentation data field may be optional. If a received message does not have a segmentation data field, it is possible to use '2', or 'The last USSD message in the segmented USS data' as the default value.

While it is possible to transfer USS data independent of the connection established on the traffic channel, it is, however, possible to logically connect the transferred USS data to a desired connection or short message on the traffic channel.

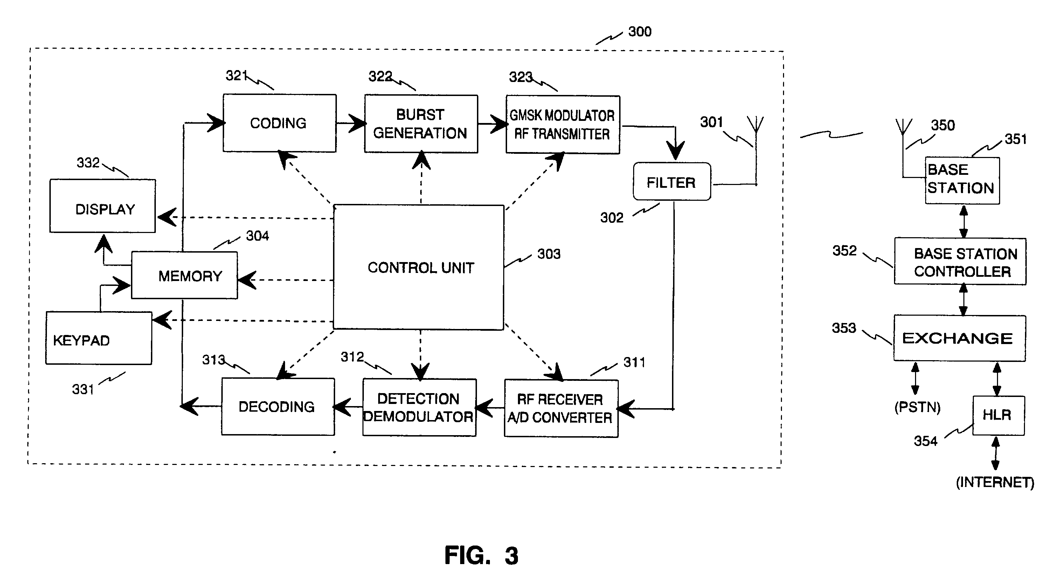

Fig. 3 shows a simplified block diagram of a mobile station 300 according to the invention and its connection to a cellular system. Fig. 3 only shows the parts of the mobile station that are essential for the application of the invention. The mobile station comprises an antenna 301 for receiving a radio frequency (RF) signal transmitted by a base station. The received RF signal is directed by means of, say, a duplex filter 302 to a RF receiver 311 where the signal is amplified and converted into digital format. Then the signal is detected and demodulated, block 312, and decoded in block 313 where the segmentation data field according to the invention is read. Then the user data of the received and decoded USSD message is stored in memory 304. When all USS data have been received and stored in memory 304, the data can be read from the memory 304 and displayed on a display unit 332. The USS data reception and handling functions mentioned above are controlled by a control unit 303.

USS data are sent from a mobile station e.g. in the following manner: data are input by means of a keypad 331 to the memory 304. When all data have been input to the memory 304, the data are read from the memory and coded in block 321 where the segmentation data field is coded to the USSD message to be transferred. Bursts are formed from the coded data, block 322, which are then modulated into a RF signal to be transmitted, block 323. The RF signal to be transmitted is taken to an antenna 301 via a duplex filter 302, for example. The USS data reception and handling functions mentioned above are controlled by a control unit 303.

The blocks of the mobile station according to the invention can be formed using known components. However, the control unit controlling the other blocks performs the block control operations according to a special program, thereby providing the above-described block functions according to the invention.

Fig. 3 also shows the cellular system elements participating in the USS data transfer. Transmission and reception of the RF signal is carried out by means of the antenna 350 of a base station 351. The USSD message is transferred from the base station 351 to the home location register 354 of the cellular system via a base station controller 352 and an exchange 353. The exchange 353 is further connected to the other base stations of the system and to the public switched telephone network (PSTN), for example. The home location register 354 may have an Internet connection that can be used in the supplementary services of the system.

In the cellular system, the coding and decoding of USSD messages in accordance with the invention is performed by the same means as in a mobile station.

Above it was described a few embodiments of the method according to the invention. The principle according to the invention may of course vary within the scope of the invention defined by the claims set forth below as regards the implementation details and application fields, for example. Above it was described how the invention can be applied in a GSM system, but the invention can as well be applied in other cellular systems, like the DCS system, for example.

### References:

[1] Mouly, Pautet; The GSM System for Mobile Communications, 1992, ISBN 2-9507190-0-7
[2] GSM 01.04 (ETR 100): "European digital cellular telecommunication system (Phase 2); Abbreviations and acronyms"
[3] GSM 02.04 (ETS 300 503): "European digital cellular telecommunication system (Phase 2); General on supplementary services"
[4] GSM 02.30 (ETS 300 511): "European digital cellular telecommunication system (Phase 2); Man-Machine Interface (MMI) ofthe Mobile Station (MS)"
[5] GSM 02.90 (ETS 300 625): "European digital cellular telecommunication system (Phase 2); Stage 1 description of Unstructured Supplementary Service Data (USSD)"
[6] GSM 03.38 (ETS 300 537): "European digital cellular telecommunication system (Phase 2); Alphabets and language-specific information"
[7] GSM 04.80 (ETS 300 564): "European digital cellular telecommunication system (Phase 2); Mobile radio interface layer 3 supplementary services specification, formats and coding"

## Claims

1. A method for transferring unstructured supplementary service data (USS data) in a cellular system, said USS data comprising at least one USSD message, **characterized** in that a segmentation data field (SGM) is coded (121, 131) to the USSD message to be transferred.

2. The method of claim 1, **characterized** in that the value of said segmentation data field (SGM) is read (202) from the transferred USSD message.

3. The method of claim 1 or 2, **characterized** in that the segmentation data field (SGM) can have a first value (1) which indicates that the USS data continues in the next USSD message, and a second value (2) which indicates that the USS data ends at the current USSD message.

4. The method of claim 3, **characterized** in that the segmentation data field (SGM) can only have said two values (1, 2).

5. The method of any one of the preceding claims, **characterized** in that the USS data comprises at least two USSD messages.

6. The method of claim 5, **characterized** in that the user data of a received USSD message are stored and concatenated (201) and the user data of the received USSD messages are displayed (211) substantially simultaneously after the last USSD message has been received.

7. The method of any one of the preceding claims, **characterized** in that the USS data are transferred in logical connection with a connection established on the traffic channel.

8. A cellular system comprising means for transferring USS data, said USS data comprising at least one USSD message, **characterized** in that said means for transferring USS data comprises means for coding a segmentation data field (SGM) to an USSD message to be transferred, and means for reading a segmentation data field (SGM) from a transferred USSD message.

9. A mobile station connected to a cellular system, comprising means for transmitting USS data, said USS data comprising at least one USSD message, **characterized** in that said means for transmitting USS data comprises means (303, 321) for coding a segmentation data field (SGM) to an USSD message to be transferred.

10. A mobile station connected to a cellular system, comprising means for receiving USS data, said USS data comprising at least one USSD message, **characterized** in that said means for receiving USS data comprises means (303, 313) for reading a segmentation data field (SGM) from a transferred USSD message.

11. The mobile station of claim 10, **characterized** in that it comprises means (304) for storing the user data included in the received USSD messages related to particular USS data and displaying means (332) for the substantially simultaneous displaying of said stored user data after the last USSD message of the transferred USS data has been received.

12. The method of any one of claims 1 to 7, the cellular system of claim 8 or the mobile station of any one of claims 9 to 11, **characterized** in that said cellular system is substantially a GSM system.
